Europäisches Patentamt

(18) European Patent Office

Office européen des brevets

(11) Publication number: **0 082 710**
**B1**

(12) **EUROPEAN PATENT SPECIFICATION**

(45) Date of publication of patent specification: **11.03.87**

(51) Int. Cl.⁴: **B 62 D 33/06**

(21) Application number: **82306800.2**

(22) Date of filing: **20.12.82**

(54) Shock absorber and air spring assembly for tilt cab vehicle.

(30) Priority: **18.12.81 US 332189**
**15.01.82 US 339305**
**11.02.82 US 348133**

(43) Date of publication of application:
**29.06.83 Bulletin 83/26**

(45) Publication of the grant of the patent:
**11.03.87 Bulletin 87/11**

(84) Designated Contracting States:
**DE FR GB IT NL SE**

(56) References cited:
**DE-A-2 759 435**
**FR-A-2 188 711**
**US-A-4 294 324**

(73) Proprietor: **Applied Power Inc.**
**250 South Executive Drive**
**Brookfield Wisconsin 53005 (US)**

(72) Inventor: **Stephens, Robert Keith**
**410 Park Boulevard**
**Brookfield Wisconsin (US)**
Inventor: **Clark, Ray**
**N48 W27214 HY JK**
**Pewaukee Wisconsin (US)**

(74) Representative: **Smith, Philip Antony et al**
**REDDIE & GROSE 16 Theobalds Road**
**London WC1X 8PL (GB)**

**Description**

The present invention relates to tilt cab vehicles and in particular to an integral shock absorber and spring assembly supporting the cab on the chassis of the vehicle.

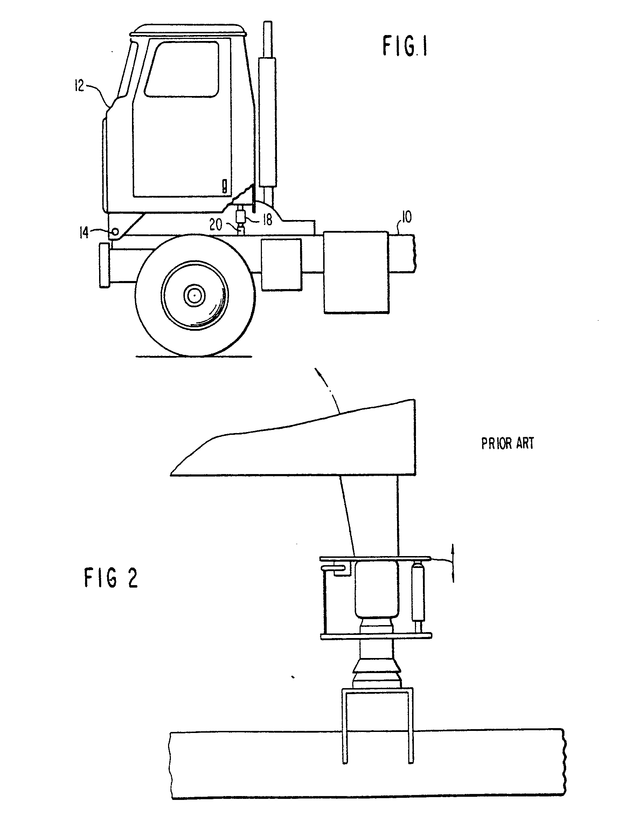

U.S. Patent Specification No. 4 294 324 shows a suspension system for a tilt cab which comprises a conventional air spring and a conventional shock absorber arranged in parallel with the air spring, the disposition of the parts being similar to that shown in Fig. 2 of the accompanying drawings. The air spring and shock absorber are connected between a plate fixed to the cab and a bearing block which comes to rest on the chassis. Members attached to the cab plate and the bearing block and surrounding the air spring are in telescopic engagement to allow relative axial movement as the cab rides on the air spring during travel of the vehicle but to restrain lateral relative movement. Releasable latches couple the telescopic members.

In this and other prior suspension systems the vertical component of the force from the tilt cylinder(s) lifts the cab to the top of the suspension members' stroke. In this position the cab is unstable and, as more weight is transferred to the suspension members, there is a danger that one or both sides of the cab may fall through the stroke of the cab suspension. This is particularly likely to occur when the cab is being pulled back from the over-center position, since the tilt cylinders have a force component that pulls down on the suspension members during that portion of the tilt cycle. Damage to the cab and to truck chassis components such as the radiator is likely to occur if the cab falls in this manner. The integral shock absorber and air spring assembly disclosed herein eliminates this problem.

In accordance with the present invention a motor vehicle comprising an elongated chassis, a cab mounted on the chassis for tilting about a transverse axis from a lowered position to a raised position, and an integral shock absorber and spring assembly (16, 18) supporting the cab on the chassis, the assembly comprising a first base, a rod projecting from said first base, a second base, a cylinder projecting from said second base, said cylinder containing a bore and being closed at the end remote from said second base by a cap through which said rod slidingly projects, a piston carried by said rod within said bore, and a reservoir for hydraulic fluid, is characterised in that the assembly further comprises a first path of fluid communication through or past said piston, a second path of fluid communication through said cylinder between said reservoir and said bore near one end of the stroke of said piston, a third path of fluid communication through said cylinder between said reservoir and said bore near the other end of the stroke of said piston, and a spring disposed to hold said piston at an intermediate position in said cylinder.

Brief Description of the Drawings

Figure 1 is a side view of a tilt cab truck incorporating the present invention.

Figure 2 is a fragmentary side view of one type of prior art which the present invention improves on.

Figure 3 is a schematic drawing of a first embodiment of the integral shock absorber and air spring assemblies.

Figure 4 is a sectional view of the shock absorber and air spring assembly shown in Figure 3.

Figure 5 is a view along the lines of 5—5 in Figure 4.

Figure 6 is a bottom plan view of Figure 4.

Figure 7 is a sectional view of the shock absorber sub-assembly of a second embodiment of the subject invention, showing the piston in upward travel.

Figure 8 is a sectional view of the second embodiment showing the piston in downward travel.

Figure 9 is a sectional view similar to Figure 7 of a third embodiment of the subject invention.

Figure 10 is a sectional view similar to Figure 7 of a fourth embodiment of the subject invention.

Figure 11 is a cross-sectional view of a fifth embodiment of a shock absorber and air spring assembly according to the invention in the upstroke mode.

Figure 12 is a view along the line 2—2 in Figure 11.

Figure 13 is a cross-sectional view similar to Figure 11, but in the downstroke mode.

Figure 14 is a view along the line 4—4 in Figure 13,

Figure 15 is a cross-sectional view of a sixth embodiment of a shock absorber and air-spring assembly in accordance with the invention in the upstroke mode,

Figure 16 is a view along the line 16—16 in Figure 15,

Figure 17 is a cross-sectional view similar to Figure 15 but in the downstroke mode, and

Figure 18 is a view along the line 18—18 in Figure 17.

Detailed Description of the Presently Preferred Embodiments

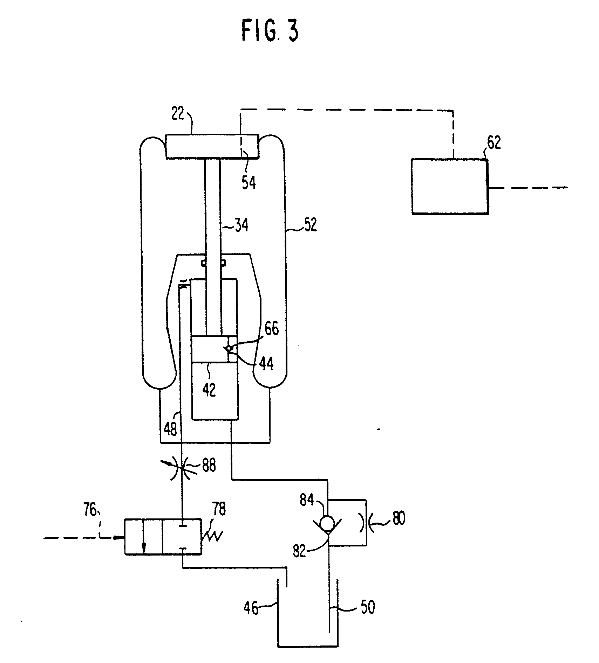

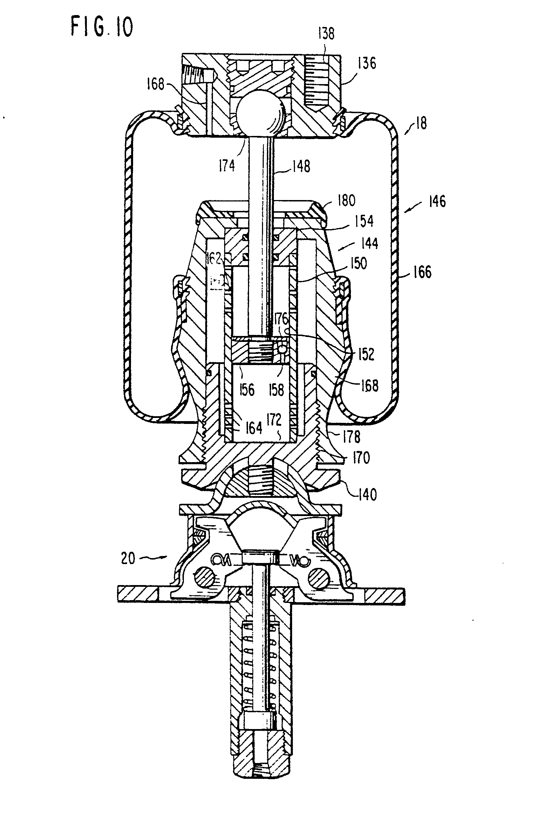

Figure 1 shows a conventional tilt cab truck comprising an elongated chassis member 10, a cab member 12 mounted on the chassis member 10 for pivotal movement about an axis 14 transverse to the longitudinal axis of the chassis member 10 from a lowered first position (shown in Figure 1) to a raised second position. An integral shock absorber and air spring assembly 16 as shown in detail in Figures 3—6 is located at each of the front corners between the chassis member 10 and the cab member 12. An integral shock absorber and air spring assembly 18 as shown in detail in Figure 10 is located at each of the rear corners between the chassis member 10 and the cab member 12, and a latch mechanism 20 is located at each of the rear corners between the assembly 18 and the chassis member 10.

Structure of the First Embodiment

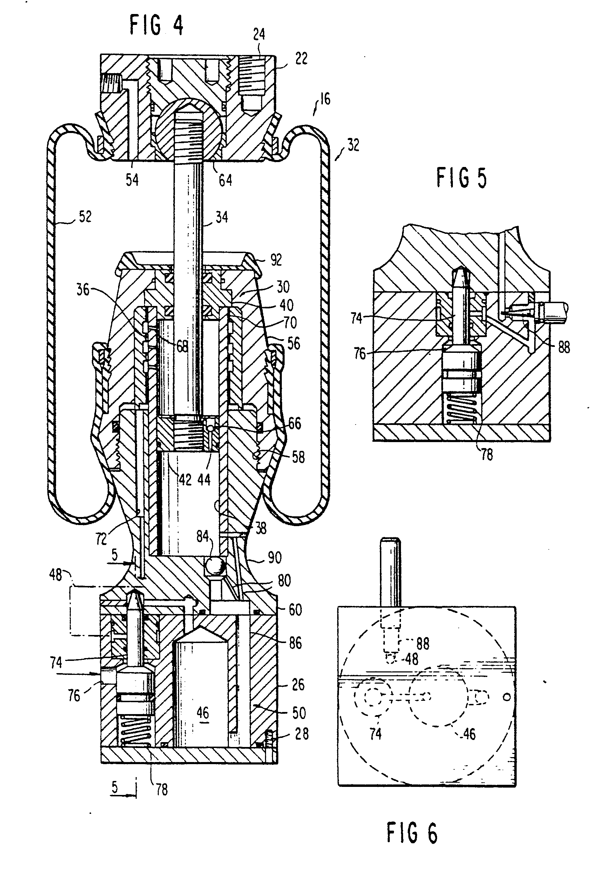

Turning to Figures 4—6, it will be seen that the shock absorber and air spring assembly 16 comprises a first base 22 adapted to be attached to the cab member 12 by a plurality of bolt holes 24, a second base 26 adapted to be attached to the chassis member 10 by a plurality of bolt holes 28, a shock absorber sub-assembly 30, and an air spring sub-assembly 32.

The shock absorber sub-assembly 30 comprises a rod 34 projecting from the first base 22, a cylinder 36 projecting from the second base 26 and containing a bore 38 closed at the end remote from the second base 26 by a cap 40 through which the rod 34 slidingly projects, and a piston 42 carried by the rod 34 within the bore 38. The piston 42 is preferably in sealing contact with the bore 38, but a first path of fluid communication 44 leads through the piston 42. A reservoir 46 for hydraulic fluids is located in the second base 26, and a second path of fluid communication 48 leads through the cylinder 36 between the reservoir 46 and the bore 38 near the lower end of the stroke of the piston 42.

The air spring sub-assembly 32 comprises an air bag 52 surrounding the rod 34 and the cylinder 36 and a fourth path of fluid communications 54 for communicating air under pressure to and from the air bag 52. The air bag 52 is connected at its upper end to the first base 22 and at its lower end to the second base 26. Alternatively, the air bag 52 could be connected at its lower end to the cylinder 36, but, in this embodiment, the second base 26 comprises an upper component 56 threadedly mounted at 58 on a lower component 60, the air bag 52 is connected to the upper component 56, and the cylinder 36 is mounted on the lower component 60. This configuration permits the lower component 60 and the cylinder 36 to be removed separately for maintenance without disturbing the air spring sub-assembly 32. In the presently preferred embodiment, the fourth path of fluid communication 54 passes through the first base 22 and leads to an external source 62 of high pressure air (shown only in Figure 3).

Since the assembly 16 is disclosed in the context of a tilt cab truck, the rod 34 is mounted on the first base 22 by means of a universal joint 64 to permit the first base 22 to pivot relative to the rod 34 as the cab member 12 pivots relative to the chassis member 10. However, it will be appreciated that, if the assembly 16 is used in a context where the first base 22 and the second base 26 move only vertically relative to each other, the universal joint 64 can be dispensed with.

The first path of fluid communication 44 has a small cross-sectional area, which restricts the passage of hydraulic fluid through it to a slower flow rate than is possible through the second and third paths of fluid communication 48 and 50. Additionally, a one-way valve 66 which permits upwards flow but which prevents downwards flow is located in the first path of fluid communication 44.

The second path of fluid communication 48 starts with a plurality of axially spaced passageways 68 leading through the cylinder 36 to an annular chamber 70 between the cylinder 36 and the upper component 56 of the second base 26. The purpose of having a plurality of axially spaced passageways 68 is to affect the reaction characteristics of the shock absorber sub-assembly 30. When the piston 42 begins an upwards stroke, all of the passageways 68 are obstructed by the piston 42, and the flow of the hydraulic fluid becomes much more restricted.

It will be noted that the cross-sectional area of the passageway 68 closer to the cap 40 is smaller than the cross-sectional areas of the passageways 68 farther away from the cap 40, which also contributes to the differential and progressive nature of the damping. Moreover, it will be noted that the uppermost passageway 68 is spaced from the cap 40, so that the incompressible hydraulic fluid will be trapped in the bore 38 above the piston 42 when the piston 42 cuts off the uppermost passageway 68, preventing the piston 42 from striking the cap 40.

The annular chamber 70 communicates with a passageway 72 in the lower component 60 of the second base 26, and the passageway 72 leads to the reservoir 46. A selectively operable valve 74 is located in the passageway 72. Air pilot pressure is communicated to the valve 74 through a passageway 76 in the second base 26, opening the valve 74 against the urging of a spring 78 and permitting flow of hydraulic fluid through the second path of fluid communication 48. However, when the air pilot pressure is turned off, the spring 78 closes the valve 74, blocking the second path of fluid communication 48.

The third path of fluid communication 50 also comprises a plurality of small axially spaced passageways 80 leading through the cylinder 36 from the bore 38, and their axial spacing accomplishes the same purpose as the axial spacing of the passageways 68. However, in this case, another much larger passageway 82 containing a one-way flapper valve 84 which permits upwards flow but which prevents downwards flow is also provided. (It should be noted that the passageways 80 are open even when the passageway 82 is closed by the one-way valve 84.) The passageways 80 and 82 join in a single passageway 86 which leads to the reservoir 46.

A further optional feature of the shock absorber sub-assembly 30 is a selectively operable variable orifice mechanism 88 (shown only in Figure 5) in the second path of fluid communication 48. The mechanism 88 can, for instance, comprise a conical valve actuation of which is under the control of the truck driver, thus permitting the truck driver to control the stiffness of the shock absorber sub-assembly 30.

The second base 26 is formed with an external neck 90 adjacent to the air bag 52, and the air bag 52 is designed so that, when it expands, it expands into the neck 90. This construction permits the external, or radial, dimensions of the air bag 52 to remain approximately uniform as the air bag 52 expands and contracts.

A resilient pad 92 is provided on top of the upper component 56 to cushion the jar when the first base 22 contacts the upper component of the second base 26.

Operation of the First Embodiment

When the truck is travelling over the road, the air bag 52 is inflated, tending to hold the piston 42 in the middle of the bore 38. Air pilot pressure is communicated to the valve 74 through the passageway 76, and the second path of fluid communication 48 is open.

When an unevenness in the road causes the piston 42 to move upwardly in the bore 38, the one-way valve 1 in the first path of fluid communication 44 is closed by hydraulic pressure. Hydraulic fluid exits the bore 38 above the piston 42 through the second path of fluid communication 48 and flows to the reservoir 46. At the same time, fluid from the reservoir 46 flows through the third path of communication 50 (including the passageways 80, 82, and 86) to the bore 38 beneath the piston 42.

When the piston 42 moves downwardly in the bore 38, the one-way valve 66 in the first path of fluid communication 44 is opened by hydraulic pressure. Accordingly, hydraulic fluid exits the bore 38 below the piston 42 both through the first path of fluid communication 44 leading to the bore 38 above the piston 42 and through the third path of fluid communication 50 leading to the reservoir 46. However, downward movement of the piston 42 causes hydraulic pressure to close the one-way valve 84 in the third path of fluid communication 50, which means that hydraulic fluid exits the bore 38 beneath the piston 42 only through first means of fluid communication 44 and passageways 80, both of which are restricted. Since the effective cross-sectional areas of the passageways 80 is much smaller than the effective cross-sectional area of the first path of fluid communication 44, most of the flow from the bore 38 beneath the piston 42 is through the first path of fluid communication 44 to the bore 38 above the piston 42, and, since the rod 34 is coming into the bore 38 above the piston 42, the available volume of the bore 38 beneath the piston 42 decreases faster than the available volume of the bore 38 above the piston 42 increases. The net effect is that hydraulic fluid exits the bore 38 above the piston 42 when the piston 42 is moving downwardly as well as when it moves upwardly. In other words, there is a constant counter-clockwise flow through the circuit (as seen in Figures 3 and 4); the flow is never clockwise.

Since the effective cross-sectional areas of the second path of fluid communication 48 is smaller than the effective cross-sectional area of the first path of fluid communication 44 (when the one-way valve 66 is open) plus the cross-sectional area of the third path of fluid communication 50 when the one-way valve 84 is closed, the shock- absorber sub-assembly 30 has a larger damping effect when the piston 42 is moving upwardly than when the piston 42 is moving downwardly.

When it is desired to tilt the cab member 12 relative to the chassis member 10, air is drained from the air bag 52, allowing the piston 42 to sink to the bottom of the bore 38, and the air pilot pressure is turned off, allowing the valve 74 to close. Closing the valve 74 blocks the second path of fluid communication 48 and traps hydraulic fluid in the bore 38 above the piston 42. At the same time, the hydraulic fluid in the bore 38 beneath piston 42 forces open the one-way valve 66, filling the gradually increasing volume of the bore 38 above the piston 42. Hydraulic fluid which will not fit in the bore 38 above the piston 42 drains slowly to the reservoir 46 throughthe passageways 80, the hydraulic pressure having closed the one-way valve 84 in the passageway 82. Since the reservoir 46 must be large enough to accommodate hydraulic fluid displaced by entry of the rod 34 into the bore 38 during the over-the-road travel, there is room in the reservoir 46 for all the hydraulic fluid displaced by the gradual downward movement of the piston 42. Thus, when the piston 42 comes to rest on the bottom of the cylinder 36, the entire bore 38 above the piston 42 and the second passageway 48 above the valve 74 are both filled with hydraulic fluid.

After the piston 42 has come to rest on the bottom of the cylinder 36, the tilt cylinders (not shown) are actuated. As explained previously, in prior art devices actuation of the tilt cylinders lifts the cab member to the top of the suspension members' strokes, thus creating a dangerous situation. As will be readily appreciated, however, the incompressible volume of hydraulic fluid locked above the piston 42 in the present device prevents this from happening.

Structure of the Second Embodiment

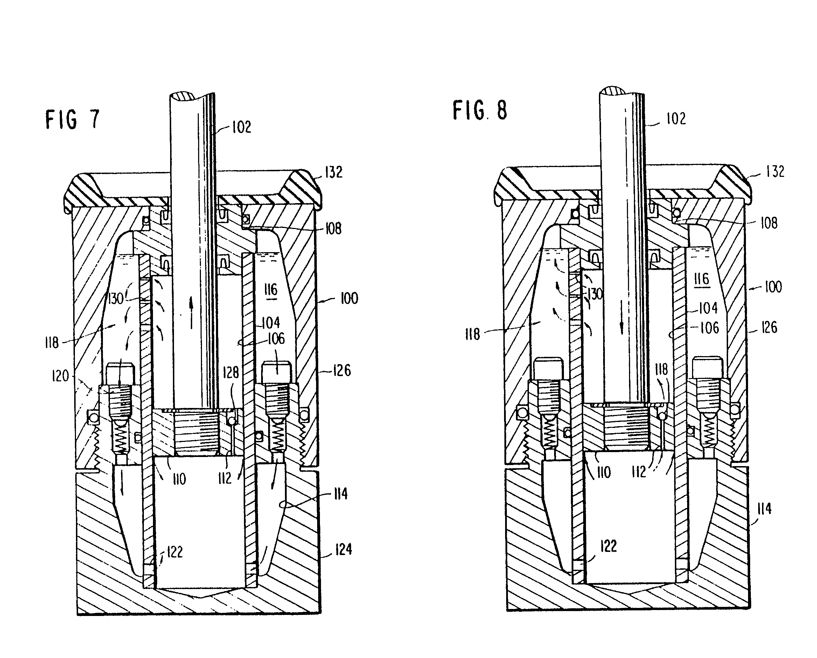

Figures 7 and 8 show only the shock absorber sub-assembly 100 of a second embodiment of the subject invention.

The shock absorber sub-assembly 100 comprises a rod 102 projecting from the first base (not shown), a cylinder 104 projecting from the second base (not shown) and containing a bore 106 closed at the end remote from the second base by a cap 108 through which the rod 102 slidingly projects, and a piston 110 is preferably in loosely sliding contact with the bore 106, permitting some peripheral leakage around the piston 110 in either direction of motion of that piston. Additionally, a first path of fluid communication 112 leads through the piston 110.

A reservoir 114 for hydraulic fluid surrounds the cylinder 104 near its lower end, and a reservoir 116 for hydraulic fluid surrounds the cylinder 104 near its upper end. A second path of fluid communication 118 leads from the bore 106 near the cap 108 through the cylinder 104 to the reservoir 116 and through a series of spring operated check valves 120 to the reservoir 114. A third path of fluid communication 122 leads from the reservoir 114 to the bore 106 near the end of the bore 106 remote from the cap 108.

The cylinder 104 is mounted in a lower housing 124 which, together with the exterior of the cylinder 104, defines the reservoir114, and the cap 108 is mounted in an upper housing 126 which, together with the exterior of the cylinder 104, define the reservoir 116.

The first path of fluid communication 112 has a small cross-sectional area, which restricts the passage of hydraulic fluid through it to a slower flow rate than is possible through the second and third paths of fluid communication 118 and 122. Additionally, a one-way valve 128 which permits upward flow but which prevents downward flow islocated in the first path of fluid communication 112.

The second path of fluid communication 118 starts with a plurality of axially spaced passageways 130 leading through the cylinder 104 to the reservoir 116 between the cylinder 104 and the upper housing 126. As with the first embodiment, the purpose of having a plurality of axially spaced passageways 130 is to affect the reaction characteristics of the shock absorber sub-assembly 100. When the piston 110 begins an upwards stroke, all of the passageways 130 are unobstructed, and the flow of hydraulic fluid through the passageways 130 is relatively free. However, towards the end of an upwards stroke, the lower passageways are obstructed by the piston 110, and the flow of the hydraulic fluid becomes much more restricted.

It will be noted that, as with the first embodiment, the cross-sectional area of the passageways 130 closer to the cap 108 is smaller than the cross-sectional area of the passageways 130 farther away from the cap 108, which also contributes to the differential and progressive nature of the damping. Moreover, it will be noted that the uppermost passageway 130 is again spaced from the cap 108, so that incompressible hydraulic fluid will be trapped in the bore 106 above the piston 110 when the piston 110 cuts off the uppermost passageway 130. While there is some peripheral leakage around the piston 110, it is a very small flow, and upperward surges are of very short duration, so that, in practice, the piston 110 is again prevented from striking the cap 108 by the locked hydraulic fluid.

The plurality of spring operated check valves 120 are mounted in the second path of fluid communication 118 where it enters the lower housing 124. The check valves 120 permit hydraulic fluid to flow downwards into the reservoir 114, but do not permit hydraulic fluid to flow upwards from the reservoir 114 into the reservoir 116.

As with the first embodiment, a resilient padding 132 is provided on top of the upper housing 126 to cushion the jar when the first base (not shown) contacts the upper housing 126 (which is fixedly mounted on the second base by means not shown).

Operation of the Second Embodiment

In operation, when an upstroke is caused by a jarring of the truck as it rides over an obstruction, the fluid paths are shown by the arrows in Figure 7. That is, hydraulic fluid from the bore 106 above the piston 110 is forced around the piston 110 to the bore 106 beneath the piston 110 to some degree, but it is mostly forced through the passageways 130, the reservoir 116, the check valves 120, the reservoir 114, and the third path of fluid communication 122 to the bore 106 beneath the piston 110.

When the upstroke is completed and the rod 102 begins to settle back down under the force of gravity, the check valves 120 close, and communication from the bore 106 beneath the piston 110 to the bore 106 above the piston 110 is limited to the first path of fluid communication 112 and to peripheral leakage around the piston 110. Since the rod 102 is re-entering the bore 106 during this phase of the operation, the volume of hydraulic fluid which exits the bore 106 beneath the piston 110 exceeds the volume which becomes available for it in the bore 106 above the piston 110, and the excess is forced out through the passageways 130 into the reservoir 116 as indicated by the arrows in Figure 8.

Third Embodiment

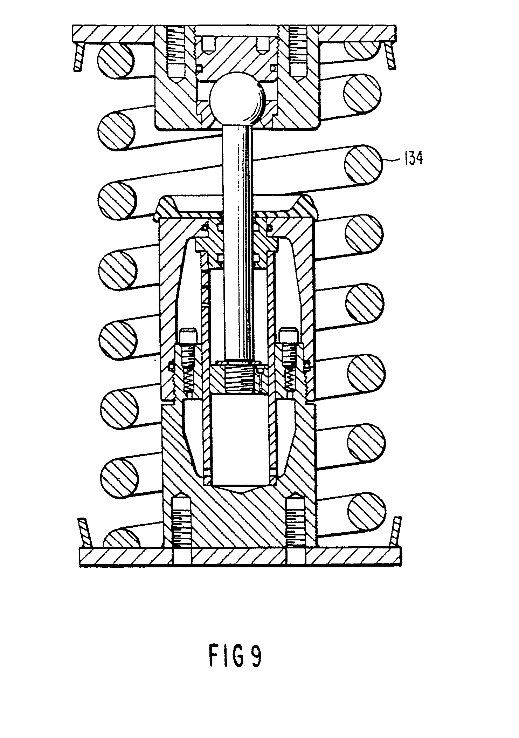

The third embodiment, shown in Figure 9, is identical to the embodiments shown in Figures 7 and 8 except that the air bag 52, which functions as a spring, has been replaced with a mechanical spring 134. In this embodiment, means (not shown) must be provided to bring the first base into contact with the second base against the urgings of the spring 134 when it is desired to lock the assembly in the down position prior to tilting the cab member 12.

Fourth Embodiment

A fourth embodiment, particularly adapted for use at the rear corners of the cab, is shown in Figure 10. It comprises a first base 136 adapted to be attached to the cab member 12 by a plurality of bolt holes 138, a second base 140 adapted to be attached to the latch mechanism 20 by a bolt 142, a shock absorber sub-assembly 144, and an air spring sub-assembly 146.

The shock absorber sub-assembly 144 comprises a rod 148 projecting from the first base 136, a cylinder 150 projecting from the second base 140 and containing a bore 152 closed at the end remote from the second base 140 by a cap 154 through which the rod 148 slidingly projects, and a piston 156 carried by the rod 148 within the bore 152. The piston 156 is preferably in sealing contact with the bore 152, but a first path of fluid communication 158 leads through the piston 156. A reservoir 160 for hydraulic fluids surrounds the cylinder 150, and a second path of fluid communication 162 leads through the cylinder 150 between the reservoir 160 and the bore 152 near the upper end of the stroke of piston 156. A third path of fluid communication 164 leads through the cylinder 150 between the reservoir 160 and the bore 156 near the lower end of the stroke of the piston 156.

The air spring sub-assembly 146 comprises an air bag 166 surrounding the rod 148 and the cylinder 150 and a fourth path of fluid communications 168 for communicating air under pressure to and from the air bag 166. The air bag 166 is connected at its upper end to the first base 136 and at its lower end to the second base 140. Alternatively, the air bag 166 could be connected at its lower end to the cylinder 150, but, in this embodiment, the second base 140 comprises an upper component 168 threadedly mounted at 170 on a lower component 172, the air bag 166 is connected to the upper component 168, and the cylinder 150 is mounted on the lower component 172. This configuration permits the lower component 172 and the cylinder 150 to be removed separately for maintenance without disturbing the air spring sub-assembly 146. In the presently preferred embodiment, the fourth path of fluid communication 168 passes through the first base 136 and leads to an external source of high pressure air (not shown).

Since the assembly 18 is disclosed in the context of a tilt cab truck, the rod 148 is mounted on the first base 136 by means of a universal joint 174 to permit the first base 136 to pivot relative to the rod 148 as the cab member 12 pivots relative to the chassis member 10. However, it will be appreciated that, if the assembly 18 is used in a context where the first member 136 and the second member 140 move only vertically relative to each other, the universal joint 174 can be dispensed with.

The first path of fluid communication 158 has a small cross-sectional area, which restricts the passage of hydraulic fluid through it to a slower flow rate than is possible through the second and third paths of fluid communication 162 and 164. Additionally, a one-way valve 176 which permits upwards flow but which prevents downwards flow is located in the first path of fluid communication 158.

The second path of fluid communication 162 comprises a plurality of axially spaced passageways leading through the cylinder 150 to the reservoir 160. The purpose of having a plurality of axially spaced passageways is to affect the reaction characteristics of the shock absorber sub-assembly 144. When the piston 156 begins an upwards stroke, all of the passageways are unobstructed, and the flow of hydraulic fluid out of the passageways 162 is relatively free. However, towards the end of an upwards stroke, the lower passageways are obstructed by the piston 156, and the flow of the hydraulic fluid becomes much more restricted.

It will be noted that the cross-sectional area of the passageways comprising the second path of fluid communication 162 close to the cap 154 are smaller than the cross-sectional areas of the passageways farther away from the cap 154, which also contributes to the differential and progressive nature of the damping. Moreover, it will be noted that the uppermost passageway is spaced from the cap 154, so that incompressible hydraulic fluid will be trapped in the bore 152 above the piston 156 when the piston 156 cuts off the uppermost passageway, preventing the piston 156 from striking the cap 154.

The third path of fluid communication 164 also comprises a plurality of small axially spaced passageways leading through the cylinder 150 from the bore 152, and their axial spacing accomplishes the same purpose as the axial spacing of the passageways comprising· the second path of fluid communication 162.

The second base 140 is formed with an external neck 178 adjacent to the air bag 166, and the air bag 166 is designed so that, when it expands, it expands into the neck 178. This construction permits the external, or radial, dimensions of the air bag 166 to remain approximately uniform as the air bag 166 expands and contracts.  .

An elastomeric pad 180 is provided at the top of the upper component 168 of the second base 140 to cushion the jar if the first base 136 comes into contact with the second base 140.

Operation of the Assembly 18

When the truck is travelling over the road, the air bag 166 is inflated, tending to hold the piston 156 in the middle of the bore 152. When an unevenness in the road causes the piston 156 to move upwardly in the bore 152, the one-way valve 176 is closed by hydraulic pressure. Hydraulic fluid exits the bore 152 above the piston 156 through the second path of fluid communication 162 and flows into the reservoir 160. At the same time, fluid flows from the reservoir 160 through the third path of fluid communication 164 into the bore 152 beneath the piston 156. Conversely, when an unevenness in the road causes the piston 156 to move downwardly in the bore 152, the one-way valve 176 is opened by hydraulic pressure. Hydraulic fluid exits the bore 152 beneath the piston 156 through the first path of fluid communication 158. Since the effective volume of the bore 152 beneath the piston 156 is decreased faster than the effective volume of the bore 152 above the piston 156 is increased (due to the presence of the rod 148 in the latter), hydraulic fluid from the bore 152 above the piston 156 is forced through the second path of fluid communication 162 as the piston 156 moves downwardly, causing a counter-clockwise flow (in Figure 10) of the hydraulic fluid regardless of the direction of motion of the piston 156.

Fifth Embodiment

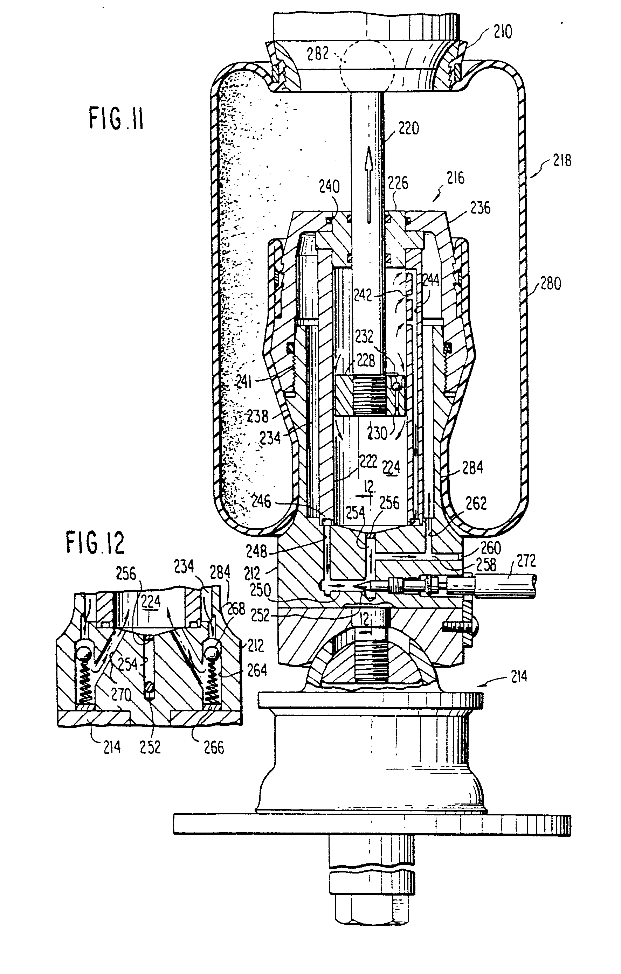

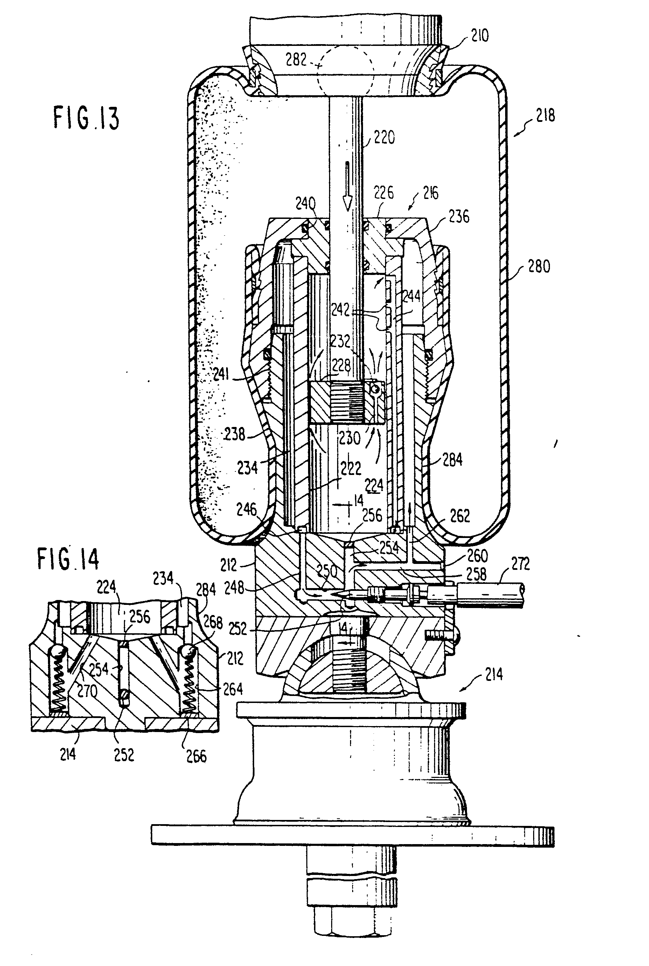

The shock absorber sub-assembly 216 comprises a rod 220 projecting from the first base 210, a cylinder 222 projecting from the second base 212 and containing a bore 224 closed at the end remote from the second base 212 by a cap 226 through which the rod 220 slidingly projects, and a piston 228 carried by the rod 220 within the bore 224. The piston 228 is not in sealing contact with the bore 224, but permits a small amount of restricted flow in either direction, as indicated by the arrows in Figures 11 and 13. In addition, a conduit 230 leads through the piston 228. The conduit 230 contains a one-way valve 232 which permits flow from beneath the piston 228 to above the piston 228, but prevents flow in the opposite direction.

An annular reservoir 234 is contained in the second base 212 surrounding the cylinder 222. The second base 212 comprises an upper component 236 and a lower component 238. The upper component 236 is a cup-shaped member which has an axial bore 240 which receives the cap 226. The upper component is threadedly mounted on the lower component 238 at 241 so that the lower component 238 and the cylinder 222 can be removed separately for maintenance without disturbing the air spring sub-assembly 218. The reservoir 234 extends into both the upper component 236 and the lower component 238.

One or a plurality of axially spaced conduits 242 lead from the bore 224 near the cap 226 to a conduit 244 in the cylinder 222. The purpose of having a plurality of axially spaced conduits 242 is to gradually affect the reaction characteristics of the shock absorber sub-assembly 216. When the piston 228 begins an upward stroke, all of the conduits 242 are unobstructed, and the flow of hydraulic fluid out of the conduits 242 is relatively free. However, towards the end of an upward stroke, the lower conduits 242 are obstructed by the piston 228, and the flow of the hydraulic fluid becomes much more restricted.

It has been found in practice that having a single conduit 242 near the top of the stroke works best. Moreover, it should be noted that, if a plurality of conduits 242 are used, the lowest conduit 242 should not be more than one piston width from the top of the stroke, since otherwise leakage may occur from above the piston directly to the chamber below the piston, rendering the adjustable orifice useless.

It will be noted that the uppermost conduit 242 is spaced from the cap 226. Accordingly, incompressible hydraulic fluid will be trapped in the bore 224 above the piston 228 when the piston 228 cuts off the uppermost conduit 242 except for the severely restricted clearance around the piston 228. This configuration greatly slows upward travel of the piston 228 at the end of its stroke and prevents contact between the piston 228 and the cap 226 in all but the most extreme cases.

The conduit 244 communicates with an annular groove 246 in the end of the cylinder 222 which abuts the second base 212. The purpose of the annular groove 246 is to make the angular orientation of the cylinder 222 relative to the second base 212 irrelevant. The annular groove 246 in turn communicates with a longitudinal blind bore 248 which extends vertically from the face of the second base 212 which abuts with the cylinder 222. The blind bore 248 communicates with a stepped radial bore 250 which contains a needle valve 252 described hereinafter. The stepped radial bore 250 communicates with an axial blind bore 254 which extends vertically from the face of the second base 212 which defines the bottom of the bore 224. However, the bore 254 is plugged at 256. The axial bore 254 communicates with another radial bore 258 (plugged at 260), and the radial bore 258 communicates with another blind longitudinal bore 262 which, finally, communicates with the reservoir 234.

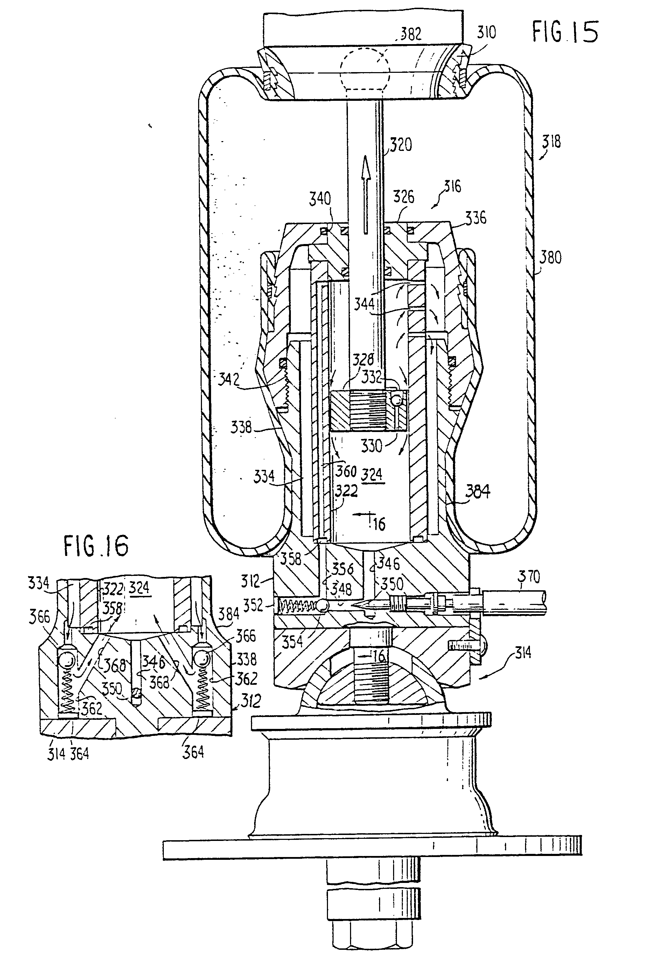

Turning to Figures 12 and 14, it will be seen that the reservoir 234 also communicates with two stepped bores 264 which are plugged at 266 and which contain one-way valves 268. Angled bore 270 provides communication between the stepped bores 264 and the lower face of the bore 224, and the one-way valve 268 permit flow from the reservoir 234 through the stepped bores 264 and the angled bores 270 to the bore 224, but prevent flow in the opposite direction.

Returning to the needle valve 252 (shown in Figures 11 and 13), it will be seen that it partially obstructs the radial bore 250. However, its position in the radial bore 250 is under the control of the operator of the truck via a cable 272, which permits the operator of the truck to control the hardness of the ride.

In the downstroke mode, flow through the damper piston keeps the chamber above the damper piston full. Accordingly, damping of the piston in the downstroke mode is altered by the adjustable orifice (i.e., the conduits 242) to the extent that the volume of hydraulic fluid displaced by the rod must pass through the adjustable orifice. Thus, the adjustable orifice controls damping of the piston in both directions, although it controls downstroke damping to a lesser extent than it controls upstroke damping.

It should also be noted that the ratio of rod size to bore size (i.e., the width of the annular clearance between the piston and the cylinder) can be altered to increase or decrease the amount of downstroke damping that is affected by the adjustable orifice.

The Air Spring Sub-Assembly 218

The air spring sub-assembly 218 comprises an air bag 280 surrounding the rod 220 and the cylinder 222. A conduit (not shown) communicates air under pressure to and from the air bag 280. The air bag 280 is connected at its upper end to the first base 210 and at its lower end to the upper component 236 of the second base 212. Alternatively, the air bag 280 could be connected at its lower end to the lower component 238 of the second base 212, but the illustrated configuration facilitates disassembly for maintenance.

Since the subject shock absorber and air spring assembly is particularly well adopted for use on a tilt cab truck, the rod 220 is mounted on the first base 210 by means of a universal joint 282. However, it will be appreciated that, if the assembly is used in a context where the first base 210 and the second base 212 move only vertically relative to each other, the universal joint 286 can be dispensed with.

The lower component 238 of the second base 212 is formed with an external neck 284 adjacent to the air bag 280, and the air bag 280 is designed so that, when it expands, it expands into the neck 284.

## Operation of the Shock Absorber and Air Spring Assembly

When a truck incorporating the subject shock absorber and air spring assembly is travelling over the road, the air bag 280 is inflated to a pressure controlled by a levelling valve, tending to hold the piston 228 in the middle of the bore 224.

When an unevenness in the road causes the piston 228 to move upwardly in the bore 224 (as shown in Figures 13 and 12), the one-way valve 232 in the conduit 230 is closed by hydraulic pressure. Some hydraulic fluid leaks around the piston 228, but most of the hydraulic fluid above the piston 228 exits the bore 224 through the conduits 242. From the conduits 242 it flows through the conduit 244, the groove 246, the bore 248, the bore 250, around the needle valve 252, and through the bore 252, the bore 258, and the bore 262 to the reservoir 234. From the reservoir 234 it flows through the bores 264 (unseating the one-way valve 268) and the bores 270 to the bore 224 beneath the piston 228.

When an unevenness in the road causes the piston 228 to move downwardly in the bore 224 (as shown in Figures 13 and 14), the one-way valves 268 are closed by hydraulic pressure, but the one-way valve 232 is opened. Thus, hydraulic fluid from the bore 224 beneath the piston 228 flows upwardly through the conduit 230 (as well as around the piston 228) to the bore 224 above the piston 228. From there it flows through the conduits 242, the conduit 244, the groove 246, the bore 248, the bore 250, around the needle valve 252, and through the bore 254, the bore 258, and the bore 262 to the reservoir 234 as before. Since the decrease in volume in the bore 224 beneath the piston 228 is greater than the increase in volume in the bore 224 above the piston 228 due to the presence of the rod in the latter, the bore 224 above the piston 228 remains filled with hydraulic fluid as the piston 228 moves downwardly.

It should be noted that the cross-sectional area of the conduit 230 below the one-way valve 232 is preferably significantly smaller than the total cross-sectional areas of the conduits 242, so that the downward stroke of the piston 228 is initially much more damped than its upward stroke.

## Sixth Embodiment

The embodiment shown in Figures 15 to 18 comprises a first base 310 adapted to be attached to a cab member (not shown) a second base 312 adapted to be attached to a cab latch mechanism 314, a shock-absorber sub-assembly 316, and an air spring sub-assembly 318.

## The Shock Absorber Sub-Assembly 316

The shockabsorber sub-assembly 316 comprises a rod 320 projecting from the first base 310, a cylinder 322 projecting from the second base 312 and containing a bore 324 closed at the end remote from the second base 312 by a cap 326 through which the rod 320 slidingly projects, and a piston 328 carried by the rod 320 within the bore 324. The piston 328 is not in sealing contact with the bore 324, but permits a small amount of restricted flow in either direction, as indicated by the arrows in Figures 15 and 17. In addition, a conduit 330 leads through the piston 328. The conduit contains a one-way valve 332 which permits flow from beneath the piston 328 to above the piston 328, but prevents flow in the opposite direction.

An annular reservoir 334 is contained in the second base 312 surrounding the cylinder 322. The second base 312 comprises an upper component 336 and a lower component 338. The upper component 336 is a cup-shaped member which has an axial bore 340 which receives the cap 326. The upper component 336 is threadedly mounted on the lower component 338 at 342 so that the lower component 338 and the cylinder 322 can be removed separately for maintenance without disturbing the air spring sub-assembly 318. The reservoir 334 extends into both the upper component 336 and the lower component 338.

A plurality of axially spaced conduits 344 lead from the bore 324 near the cap 326 to the reservoir 334. The purpose of having a plurality of axially spaced conduits 344 is to affect the reaction characteristics of the shock absorber sub-assembly 316. When the piston 328 begins an upward stroke, all of the conduits 344 are unobstructed, and the flow of hydraulic fluid out the conduits 344 is relatively free. However, towards the end of an upward stroke, the lower conduits 344 are obstructed by the piston 328, and the flow of the hydraulic fluid becomes much more restricted. Moreover, it will be noted that the uppermost conduit 344 is spaced from the cap 326. Accordingly, incompressible hydraulic fluid will be trapped in the bore 324 above the piston 328 when the piston 328 cuts off the uppermost conduit 344, except for the severely restricted clearance around the piston 328. This configuration greatly slows upward travel of the piston 328 at the end of its stroke and prevents contact between the piston 328 and the cap 326 in all but the most extreme cases.

A blind axial bore 346 extends vertically from the face of the second base 312 which defines the bottom of the bore 324. The axial bore 346 communicates with a stepped radial bore 348 which contains a needle valve 350 described hereinafter. The radial bore 348 is plugged at 352 and contains a one-way valve 354 which permits flow of hydraulic fluid from the bore 324 beneath the piston 328 to the bore 324 above the piston 328, but prevents flow in the other direction. The radial bore 348 in turn communicates with a longitudinal blind bore 356 which extends vertically to the face of the second base 312. There the longitudinal bore 356 communicates with an annular groove 358 in the end of the cylinder 322 which abuts the second base 312. The purpose of the annular groove 358 is to make the angular orientation of the cylinder 322 relative to the second base 312 irrelevant. The annular groove 358 in turn communicates with a longitudinal conduit 360 in the cylinder 322 which extends nearly the length of the cylinder 322 and which communicates with the bore 324 adjacent the cap 326.

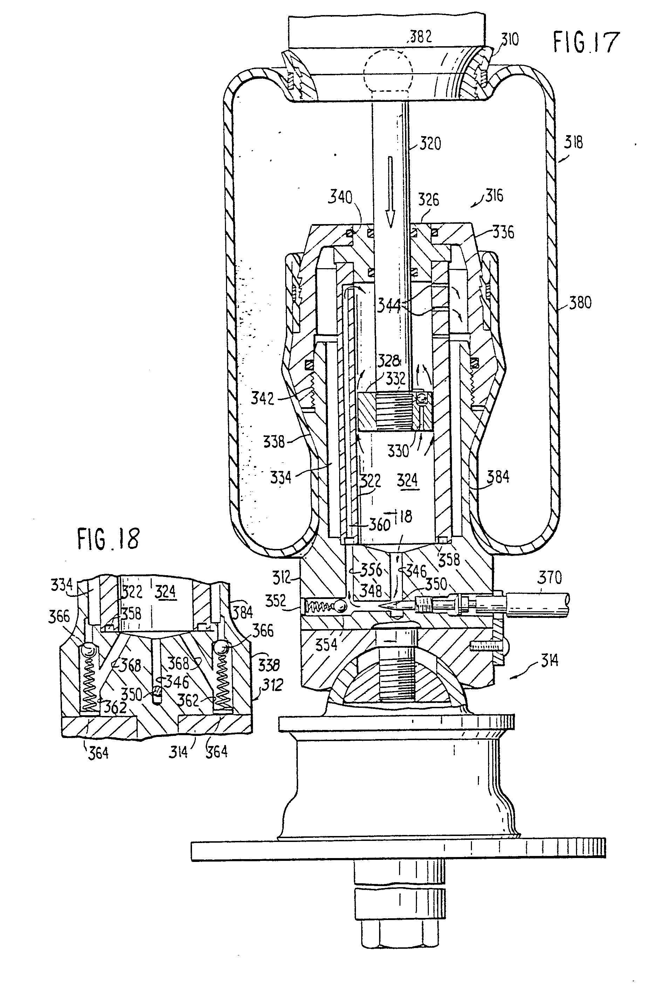

Turning to Figures 16 and 18, it will be seen that the reservoir 334 also communicates with two stepped bores 362 which are plugged at 364 and which contain one-way valves 366. Angled bores 368 provide communication between the stepped bores 362 and the lower face of the bore 324, and the one-way valves 366 permit flow from the reservoir 334 through the stepped bores 362 and the angles bores 368 to the bore 324, but prevent flow in the opposite direction.

Returning to the needle valve 350 (shown in Figures 15 and 17), it will be seen that it partially obstructs the radial bore 348. However, its position in the radial bore 348 is under the control of the operator of the truck via a cable 370 which permits the operator of the truck to control the damping rate of the suspension device.

The Air Spring Sub-Assembly 318

The air spring sub-assembly 318 comprises an air bag 380 surrounding the rod 320 and the cylinder 322. A conduit (not shown) communicates air under pressure to and from the air bag 380. The air bag 380 is connected at its upper end to the first base 310 and at its lower end to the upper component 336 of the second base 312. Alternatively, the air bag 380 could be connected at its lower end to the component 338 beneath the reservoir 334, but the illustrated configuration facilities disassembly for maintenance.

Since the subject shock absorber and air spring assembly is particularly well adapted for use on a tilt cab truck, the rod 320 is mounted on the first base 310 by means of a universal joint 382. However, it will be appreciated that, if the assembly is used in a context where the first base 310 and the second base 312 move only vertically relative to each other, the universal joint 382 can be dispensed with.

The lower component 338 of the second base 312 is formed with an external neck 384 adjacent to the air bag 380, and the air bag 380 is designed so that, when it expands, it expands into the neck 384. This construction provides the proper rolling surface for the air bag 380. The geometry of the neck 384 can be altered to control the spring characteristics of the air bag 380.

Operation of the Shock Absorber and Air Spring Assembly

When a truck incorporating the subject shock absorber and air spring assembly is travelling over the road, the air bag 380 is inflated. A separate levelling valve controls the méan position of the piston 328.

When an unevenness in the road causes the piston 328 to move upwardly in the bore 324 (as shown in Figures 15 and 16), the one-way valve 332 in the conduit 330 and the one-way valve 354 in the stepped bore 348 are closed by hydraulic pressure. Some hydraulic fluid leaks around the piston 328, but most of the hydraulic fluid above the piston 328 exits the bore 324 to the reservoir 334 through the conduits 344. From the reservoir 334, the hydraulic fluid flows through the bores 362 (unseating the one-way valves 366) and the bores 368 to the bore 324 beneath the piston 328.

When an unevenness in the road causes the piston 328 to move downwardly in the bore 324 (as shown in Figures 17 and 18), the one-way valves 366 are closed by hydraulic pressure, but the one-way valves 332 and 354 are opened. Thus, hydraulic fluid from the bore 324 beneath the piston 328 flows upwardly through the conduit 330 (as well as around the piston 328), to the bore 324 above the piston 328 and downwardly through the bore 346, the bore 348, around the needle valve 350, past the open one-way valve 354, and up through the bore 356, the annular groove 358, and the conduit 360 to the bore 324 above the piston 328.

It should be noted that the cross-sectional area of the conduit 330 below the one-way valve 332 is preferably significantly smaller than the total cross-sectional areas of the conduits 344, so that the downward stroke of the piston 328 is initially much more damped than its upward stroke.

It will be seen that the construction provides the capability of remotely adjusting the amount of damping on the downstroke of the damper piston. In the downstroke mode there are three paths for hydraulic fluid to transfer from the chamber below the piston to the chamber above the piston. A relatively small amount of hydraulic fluid leaks around the piston. A portion of the hydraulic fluid flows through a restricted one-way orifice in the piston. The remaining hydraulic fluid is forced past a remotely adjustable orifice in the base of the damper, past a one-way valve, and is deposited in the chamber above the piston. The orifice in the piston is optional. If used, it fixes the maximum amount of downstroke damping obtainable.

**Claims**

1. A motor vehicle comprising an elongated chassis (10), a cab (12) mounted on the chassis for tilting about a transverse axis (14) from a lowered position to a raised position, and an integral shock absorber and spring assembly (16, 18) supporting the cab on the chassis, the assembly comprising
   a first base (22, 136, 210, 310);
   a rod (34, 148, 220, 320) projecting from said first base;
   a second base (26, 140, 212, 312)

a cylinder (36, 150, 222, 322) projecting from said second base, said cylinder containing a bore (38, 152, 224, 324) and being closed at the end remote from said second base by a cap (40, 154, 226, 326) through which said rod slidingly projects;

a piston (42, 156, 228, 328) carried by said rod within said bore; and

a reservoir (46, 160, 234, 334) for hydraulic fluid, characterised in that the assembly further comprises

a first path of fluid communication (44, 158, 230, 330) through or past said piston;

a second path of fluid communication (48, 162, 242, 344) through said cylinder between said reservoir and said bore near one end of the stroke of said piston;

a third path of fluid communication (50, 164, 270, 368) through said cylinder between said reservoir and said bore near the other end of the stroke of said piston; and

a spring (52, 146, 218, 318) disposed to hold said piston at an intermediate position in said cylinder.

2. An assembly as claimed in claim 1 in which the first path of fluid communication contains a one-way valve permitting flow towards the end of the cylinder remote from the second base.

3. An assembly as claimed in claim 1 or 2 in which the reservoir is formed between the cylinder and a housing surrounding the cylinder.

4. An assembly as claimed in claim 3 in which the housing is threadedly mounted on the second base.

5. An assembly as claimed in claim 3 or 4 in which the spring is an air bag attached at one end to the first base and at the other end to the housing, said housing having an external neck adjacent the air bag into which the air bag expands.

6. An assembly as claimed in claim 2, in which the reservoir is located in the second base.

7. An assembly as claimed in any of the preceding claims in which the piston is in sealing contact with the bore.

8. An assembly as claimed in any of the preceding claims in which the rod is mounted on the first base by means of a universal joint.

9. An assembly as claimed in any of the preceding claims in which the first path permits a slower flow rate than one of the second and third paths.

10. An assembly as claimed in any of the preceding claims in which the second path comprises a plurality of axially-spaced passages, whereby the effective flow cross-section of the second path is reduced as the piston nears said one end of its stroke.

11. An assembly as claimed in claim 10 in which the axially-spaced passages decrease in cross-sectional area in the direction towards the cap.

12. An assembly as claimed in any of the preceding claims in which the third path comprises a plurality of axially-spaced passages whereby the flow cross-section is reduced as the piston nears the said other end of its stroke.

13. An assembly as claimed in any of the preceding claims wherein the reservoir is in two parts separated by one-way valve means allowing flow between the two parts of the reservoir only when the piston moves towards said second base and forces fluid into the reservoir through said third path.

14. An assembly as claimed in any of the preceding claims including a selectively operable valve in the second path which when closed prevents movement of the piston towards the cap.

15. An·assembly as claimed in any of the preceding claims including a one-way valve in said third path allowing flow from said reservoir to said bore.

16. An assembly as claimed in any of the preceding claims in which the second path contains an adjustable flow control valve.

17. An assembly as claimed in any of the preceding claims having a fourth path of fluid communication between the two ends of said bore including an adjustable flow-control valve and a one-way valve permitting flow from the side of the piston facing the second base to the side facing the cap.

18. An assembly as claimed in any of the preceding claims in which the spring is an air bag.

19. An assembly as claimed in claim 18 including a conduit for supplying air under pressure to the bag and removing air from the bag.

20. A motor vehicle as claimed in any of the preceding claims in which the said assembly is mounted at a point longitudinally spaced from the tilt axis.

21. A motor vehicle as claimed in claim 20 in which said assembly is mounted on the cab.

22. A motor vehicle as claimed in any of claims 1 to 19 in which the said assembly has a universal joint connecting the piston rod with the cab and the said universal joint is arranged substantially in alignment with the tilt axis.

## Revendications

1. Véhicule à moteur comprenant un châssis allongé (10), une cabine (12) montée sur le châssis de façon à basculer autour d'un axe transversal (14) entre une position abaissée et une position élevée, et un ensemble d'un seul tenant comprenant un amortisseur et un ressort (16, 18) supportant la cabine sur le châssis, cet ensemble comprenant:

— une première base (22, 136, 210, 310);

— une tige (34, 148, 220, 320) faisant saillie de ladite première base;

—·une seconde base (26, 140, 212, 312);

— un cylindre (36, 150, 222, 322) faisant saillie de ladite seconde base, ledit cylindre comprenant un alésage (38, 152, 224, 324) et étant fermé à l'extrémité éloignée de ladite seconde base par un couvercle (40, 154, 226, 326) à travers lequel ladite tige fait saillie en coulissant;

— un piston (42, 156, 228, 328) supporté par ladite tige à l'intérieur dudit alésage; et

— un réservoir (46, 160, 234, 334) pour du fluide hydraulique, caractérisé en ce que l'ensemble comprend en outre:

— un premier trajet de communication de fluide (44, 158, 230, 330) à travers ou au-delà dudit piston;

— un second trajet de communication de fluide (48, 162, 242, 344) à travers ledit cylindre entre ledit réservoir et ledit alésage près de l'une des extrémités de la course dudit piston;

— un troisième trajet de communication de fluide (50, 164, 270, 368) à travers ledit cylindre entre ledit réservoir et ledit alésage, près de l'autre extrémité de la course dudit piston; et

— un ressort (52, 146, 218, 318) disposé de façon à retenir ledit piston dans une position intermédiaire dans ledit cylindre.

2. Ensemble selon la revendication 1, caractérisé en ce que le premier trajet de communication de fluide comprend une soupape à une voie permettant l'écoulement vers l'extrémité du cylindre éloignée de la seconde base.

3. Ensemble selon la revendication 1 ou 2, caractérisé en ce que le réservoir est formé entre le cylindre et un carter entourant le cylindre.

4. Ensemble selon la revendication 3, caractérisé en ce que le carter est fixé par vissage sur la seconde base.

5. Ensemble selon la revendication 3 ou 4, caractérisé en ce que le ressort est une poche d'air fixée par une première extrémité à la première base et par une seconde extrémité au carter, ledit carter comportant un col extérieur voisin de la poche d'air dans lequel la poche d'air pénètre en se dilatant.

6. Ensemble selon la revendication 2, caractérisé en ce que le réservoir est placé dans la seconde base.

7. Ensemble selon l'une quelconque des revendications précédentes, caractérisé en ce que le piston est en contact étanche avec l'alésage.

8. Ensemble selon l'une quelconque des revendications précédentes, caractérisé en ce que la tige est montée sur la première base au moyen d'un joint universel.

9. Ensemble selon l'une quelconque des revendications précédentes, caractérisé en ce que le premier trajet permet un débit plus lent que l'extrémité du second trajet et du troisième trajet.

10. Ensemble selon l'une quelconque des revendications précédentes, caractérisé en ce que le second trajet comprend une pluralité de passages séparés axialement, de telle façon que la section d'écoulement effective du second trajet diminue lorsque le piston se rapproche de ladite première extrémité de sa course.

11. Ensemble selon la revendication 10, caractérisé en ce que les passages séparés axialement ont une aire de section droite décroissante en direction du couvercle.

12. Ensemble selon l'une quelconque des revendications précédentes, caractérisé en ce que le troisième trajet comprend une pluralité de passages séparés axialement, de telle façon que la section d'écoulement diminue lorsque le piston se rapproche de ladite autre extrémité de sa course.

13. Ensemble selon l'une quelconque des revendications précédentes, caractérisé en ce que le réservoir est en deux parties séparées par un ensemble de soupapes à une voie ne permettant l'écoulement entre les deux parties du réservoir que lorsque le piston se déplace vers ladite seconde base et refoule du fluide dans le réservoir par ledit troisième trajet.

14. Ensemble selon l'une quelconque des revendications précédentes, caractérisé en ce qu'il comprend une soupape manoeuvrable sélectivement dans le second trajet, qui empêche, lorsqu'elle est fermée, le piston de se déplacer vers le couvercle.

15. Ensemble selon l'une quelconque des revendications précédentes, caractérisé en ce qu'il comprend une soupape à une voie dans ledit troisième trajet, permettant l'écoulement depuis ledit réservoir dans ledit alésage.

16. Ensemble selon l'une quelconque des revendications précédentes, caractérisé en ce que le second trajet comprend une soupape de réglage de débit ajustable.

17. Ensemble selon l'une quelconque des revendications précédentes, caractérisé en ce qu'il comporte un quatrième trajet de communication de fluide entre les deux extrémités dudit alésage, comprenant une soupape de réglage de débit ajustable et une soupape à une voie permettant l'écoulement depuis le côte du piston situé vers la seconde base dans le côté situé vers le couvercle.

18. Ensemble selon l'une quelconque des revendications précédentes, caractérisé en ce que le ressort est une poche d'air.

19. Ensemble selon la revendication 18, caractérisé en ce qu'il comprend un conduit pour amener de l'air sous pression à la poche et évacuer de l'air de la poche.

20. Véhicule à moteur, selon l'une quelconque des revendications précédentes, caractérisé en ce que ledit ensemble est monté en un point longitudinalement écarté de l'axe de basculement.

21. Véhicule à moteur selon la revendication 20, caractérisé en ce que ledit ensemble est monté sur la cabine.

22. Véhicule à moteur selon l'une quelconque des revendications 1 à 19, caractérisé en ce que ledit ensemble comporte un joint universel reliant la tige de piston à la cabine, et en ce que ledit joint universel est disposé sensiblement en alignement avec l'axe de basculement.

**Patentansprüche**

1. Motorfahrzeug mit einem langgestreckten Fahrwerk (10), einem auf dem Fahrwerk um eine Querachse (14) aus einer abgesenkten in eine angehobene Stellung schwenkbaren Fahrerhaus (12) und einer einstückigen Stoßdämpfer- und Federanordnung (16, 18), welche das Fahrerhaus auf dem Fahrwerk abstütz und folgendes aufweist:

eine erste Basis (22, 136, 210, 310);

eine von der ersten Basis wegstehende Stange (34, 148, 220, 320);

eine zweite Basis (26, 140, 212, 312)

einen von der zweiten Basis wegstehenden Zylinder (36, 150, 222, 322), der eine Bohrung (38, 152, 224, 324) hat und an dem von der zweiten Basis entfernten Ende von einer Kappe (40, 154, 226, 326) verschlossen ist, durch die die Stange gleitend vorsteht;

einen von der Stange innerhalb der Bohrung getragenen Kolben (42, 156, 228, 328), und

einen Vorratsbehälter (46, 160, 234, 334) für hydraulisches Fluid, dadurch gekennzeichnet, daß die Anordnung ferner folgendes aufweist:

einen ersten Fluidverbindungsweg (44, 158, 230, 330) durch oder an dem Kolben vorbei;

einen zweiten Fluidverbindungsweg (48, 162, 242, 344) durch den Zylinder zwischen dem Vorratsbehälter und der Bohrung in der Nähe eines Endes des Kolbenhubs;

einen dritten Fluidverbindungsweg (50, 164, 270, 368) durch den Zylinder zwischen dem Vorratsbehälter und der Bohrung in der Nähe des anderen Endes des Kolbenhubs; und

eine Feder (52, 146, 218, 318), die geeignet ist, den Kolben in einer Zwischenstellung im Zylinder zu halten.

2. Anordnung nach Anspruch 1, bei der der erste Fluidverbindungsweg ein in einer Richtung wirksames Ventil enthält, welches eine Strömung zu dem von der zweiten Basis entfernten Ende des Zylinders ermöglicht.

3. Anordnung nach Anspruch 1 oder 2, bei der der Vorratsbehälter zwischen dem Zylinder und einem den Zylinder umgebenden Gehäuse gebildet ist.

4. Anordnung nach Anspruch 3, bei der das Gehäuse durch Anschrauben an der zweiten Basis angebracht ist.

5. Anordnung nach Anspruch 3 oder 4, bei der die Feder ein an einem Ende an der ersten Basis und am anderen Ende am Gehäuse befestigter Luftsack ist, wobei das Gehäuse dem Luftsack benachbart außen eine Hohlkehle hat, in die hinein der Luftsack expandiert.

6. Anordnung nach Anspruch 2, bei der der Vorratsbehälter in der zweiten Basis angeordnet ist.

7. Anordnung nach einem der vorhergehenden Ansprüche, bei der der Kolben mit der Bohrung abdichtend in Berührung steht.

8. Anordnung nach einem der vorhergehenden Ansprüche, bei der die Stange an der ersten Basis mittels eines Universalgelenks angebracht ist.

9. Anordnung nach einem der vorhergehenden Ansprüche, bei der der erste Weg einen langsameren Strömungsdurchsatz ermöglicht als der zweite und dritte Weg.

10. Anordnung nach einem der vorhergehenden Ansprüche, bei der der zweite Weg eine Vielzahl von axial beabstandeten Durchlässen aufweist, wodurch der wirksame Strömungsquerschnitt des zweiten Weges verringert wird, wenn sich der Kolben dem einen Ende seines Hubes nähert.

11. Anordnung nach Anspruch 10, bei der die Querschnittsfläche der axial beabstandeten Durchlässe in Richtung zur Kappe abnimmt.

12. Anordnung nach einem der vorhergehenden Ansprüche, bei der der dritte Weg eine Vielzahl von axial beabstandeten Durchlässen aufweist, wodurch der Strömungsquerschnitt verringert wird, wenn sich der Kolben dem anderen Ende seines Hubes nähert.

13. Anordnung nach einem der vorhergehenden Ansprüche, bei der der Vorratsbehälter zweiteilig und durch eine in einer Richtung wirksame Ventileinrichtung getrennt ist, die eine Strömung zwischen den beiden Teilen des Vorratsbehälters nur dann erlaubt, wenn der Kolben sich zu der zweiten Basis bewegt und Fluid durch den dritten Weg in den Vorratsbehälter drängt.

14. Anordnung nach einem der vorhergehenden Ansprüche mit einem wahlweise betätigbaren Ventil in dem zweiten Weg, welches, wenn es geschlossen ist, eine Bewegung des Kolbens zur Kappe verhindert.

15. Anordnung nach einem der vorhergehenden Ansprüche mit einem in einer Richtung wirksamen Ventil in dem dritten Weg, welches eine Strömung von dem Vorratsbehälter zu der Bohrung erlaubt.

16. Anordnung nach einem der vorhergehenden Ansprüche, bei der der zweite Weg ein einstellbares Strömungssteuerventil enthält.

17. Anordnung nach einem der vorhergehenden Ansprüche mit einem vierten Fluidverbindungsweg zwischen den Enden der Bohrung, der ein einstellbares Strömungssteuerventil und ein in einer Richtung wirksames Ventil enthält, welches eine Strömung von der der sweiten Basis zugewandten Seite des Kolbens zu der der Kappe zugewandten Seite ermöglicht.

18. Anordnung nach einem der vorhergehenden Ansprüche, bei der die Feder ein Luftsack ist.

19. Anordnung nach Anspruch 18 mit einer Leitung zur Zufuhr von unter Druck stehender Luftzum Sack und zum entfernen von Luft vom Sack.

20. Motorfahrzeug nach einem der vorhergehenden Ansprüche, bei dem die Anordnung an einem Punkt angebracht ist, der in Längsrichtung einen Abstand von der Schwenkachse hat.

21. Motorfahrzeug nach Anspruch 20, bei dem die Anordnung am Fahrerhaus angebracht ist.

22. Motorfahrzeug nach einem der Ansprüche 1 bis 19, bei dem die Anordnung ein Universalgelenk hat, welches die Kolbenstange mit dem Fahrerhaus verbindet und das Universalgelenk im wesentlichen mit der Schwenkachse ausgerichtet angeordnet ist.

FIG.1

PRIOR ART

FIG 2

# FIG. 3

FIG 4

FIG 5

FIG 6

FIG 7

FIG. 8

0 082 710

FIG 9

FIG. 10

FIG.11

FIG.12

7

FIG.13

FIG.14

8

# 0 082 710

**FIG.15**

**FIG.16**

FIG.17

FIG.18

0 082 710

10